# EUROPÄISCHE PATENTSCHRIFT

(11) **EP 2 545 292 B1**
(45) Veröffentlichungstag und Bekanntmachung des Hinweises auf die Patenterteilung: **17.06.2015**
(21) Anmeldenummer: 11704536.9
(22) Anmeldetag: 03.02.2011
(51) Int. Cl.: F16C 9/04, F16C 33/14

(54) **VERFAHREN ZUR HERSTELLUNG EINES BRUCHGETRENNTEN BAUTEILS**
METHOD FOR PRODUCING A FRACTURE-DIVIDED COMPONENT
PROCÉDÉ DE FABRICATION D'UNE PIÈCE EN DEUX PARTIES

(30) Priorität: 09.03.2010 DE 102010010642
(43) Veröffentlichungstag der Anmeldung: 16.01.2013
(73) Patentinhaber: Bayerische Motoren Werke Aktiengesellschaft, 80809 München (DE)
(72) Erfinder: LUCHNER, Clemens, 83236 Übersee (DE); KRONENBERG, Marc, 80992 München (DE); KORING, Rolf, 41363 Jüchen (DE); KOWOLLIK, Ralf, 13158 Berlin (DE)
(86) Internationale Anmeldenummer: PCT/EP2011/000492
(87) Internationale Veröffentlichungsnummer: WO 2011/110259

(56) Entgegenhaltungen:
- EP-A2- 1 225 348
- EP-A2- 1 990 127
- DE-A1- 4 303 592
- DE-A1-102004 018 921

## Beschreibung

Die Erfindung betrifft ein Verfahren zur Herstellung eines bruchgetrennten Bauteils, insbesondere eines Pleuels, mit einer wenigstens teilweise beschichteten Bohrung.

Es ist bekannt, bei Bauteilen, die über keine gesonderten Gleit- oder Wälzlager verfügen, wie etwa Integralpleuel für Kraftfahrzeug-Brennkraftmaschinen, die Lagerflächen der Bauteile zu vergüten oder zu beschichten, damit diese hohen Beanspruchungen widerstehen. Ebenso ist es bekannt, Lagerbauteile in einem Durchgang zu fertigen und erst danach eine Lagerhälfte durch Bruchtrennen abzutrennen, wenn die spätere Montage ein geteiltes Bauteil erfordert (z. B. Pleuelfuß und Pleuellagerdeckel).

In der DE 10 2004 003 403 A1 und der DE 10 2004 018 921 A1 sind Herstellungsverfahren beschrieben, bei denen zumindest das große Lagerauge eines Pleuels beschichtet wird, bevor dieses bruchgetrennt wird. Bei diesen Verfahren wird davon ausgegangen, dass nach der thermischen Beschichtung mit einem hochschmelzendem Lagerwerkstoff (z. B. Kupfer- (Cu-) basiert, zulässige Bauteil- bzw. Substrattemperatur > 200"C nach Fertigstellung der Beschichtung) sowohl im eigentlichen Pleuel noch in der stoffschlüssig angebundenen Beschichtung keine oder nur vernachlässigbare inneren Spannungen vorliegen, so dass die bruchgetrennten Bauteilhälften ohne Richtvorgang oder Montagehilfsmittel wieder passgenau zusammengesetzt werden können.

In Versuchen hat sich jedoch gezeigt, dass nach der Beschichtung von Lagerbauteilen mit niedrigschmelzenden Lagerwerkstoffen (z. B. Zinn-Antimon-Legierungen (SnSb-Systeme), zulässige Bauteil- bzw. Substrattemperatur < 100"C nach Fertigstellung der Beschichtung) in der Beschichtung innere Zugspannungen vorliegen, die beim Bruchtrennen der Lagerhälften frei werden. Der dabei auftretende unterschiedlich starke Verzug der Lagerhälften aufgrund unterschiedlicher Steifigkeit führt dazu, dass die Lagerhälften zum passgenauen Wiederzusammensetzen bei einer Fertigbearbeitung oder bei der Montage entweder gerichtet werden müssen, oder dass Hilfsmittel erforderlich sind.

Gleiches gilt sinngemäß auch für hochschmelzende Lagerwerkstoffe und einer sich einstellenden Bauteil- bzw. Substrattemperatur von < 200"C nach Fertigstellung der Beschichtung.

Aus der DE 10 2007 021 622 A1 ist ein Verfahren zur Herstellung eines bruchgetrennten Lagerbauteils aus einem Kohlenstoffstahl bekannt, bei dem eine zumindest bereichsweise Vergütung und/oder Beschichtung einer Lagerfläche erfolgt, die mit der Einbringung von Spannungen verbunden ist. Vor oder nach dem Bruchtrennen ist deshalb eine partielle Wärmebehandlung zur gezielten Einbringung von Gegenspannungen oder eine Umformung vorgesehen. Hierbei wird davon ausgegangen, dass beim Bruchtrennen eines mit einer Kupferbasierten Beschichtung versehenen Pleuels aus Kohlenstoffstahl ein unterschiedlich starkes "Auffedern" der Lagerhälften (Pleuelfuß und Pleuellagerdeckel) stattfindet. Auffedern bedeutet, dass das Außenmaß (Breitenmaß) einer Lagerhälfte nach dem Bruchtrennen größer ist als vor dem Bruchtrennen. Ein Auffedern entsteht, wenn im oberflächennahen Bohrungsbereich z. B. eine martensitische Gefügeumwandlung vorliegt (Volumenzunahme durch Martensitbildung).

Aufgabe der Erfindung ist es, ein vorteilhaftes Herstellungsverfahren für ein bruchgetrenntes Bauteils anzugeben, bei dem insbesondere im Falle einer Beschichtung mit einem niedrigschmelzenden Werkstoff sichergestellt ist, dass nach dem Bruchtrennen die beiden Bauteilhälften wieder passgenau zusammengesetzt werden können.

Gelöst wird diese Aufgabe durch ein Verfahren mit den Merkmalen des Anspruchs 1 sowie durch ein Verfahren mit den Merkmalen des Anspruchs 6. Vorteilhafte und zweckmäßige Ausgestaltungen der erfindungsgemäßen Herstellungsverfahren sind in den Unteransprüchen angegeben.

Gemäß einem ersten Aspekt der Erfindung umfasst das erfindungsgemäße Verfahren zur Herstellung eines bruchgetrennten Bauteils, insbesondere eines Pleuels, mit einer wenigstens teilweise beschichteten Bohrung folgende Schritte:
- Bereitstellen eines Rohbauteils;
- Aufbringen einer Beschichtung aus einem Lagerwerkstoff an einer Bohrungsoberfläche; und
- Umformen der Beschichtung zur Kompensation von inneren Zugspannungen in der Beschichtung vor einem Bruchtrennen des Bauteils.

Die Erfindung beruht auf der Erkenntnis, dass insbesondere bei einer Beschichtung eines Bauteils mit einem niedrigschmelzenden Lagerwerkstoff, z. B. mit einem Sn-basierten Pulver, Zugspannungen in der Beschichtung induziert werden, die nach dem Bruchtrennen zu einem "Einfallen" führen. Das Außenmaß (Breitenmaß) einer Lagerhälfte ist also nach dem Bruchtrennen kleiner als vor dem Bruchtrennen. Im konkreten Fall eines Pleuels, das am großen Pleuelauge bruchgetrennt wird, fällt der beschichtete Pleuellagerdeckel gegenüber dem nicht beschichteten Pleuelfuß aufgrund der unterschiedlichen Steifigkeiten ein. Diesem unerwünschten Effekt wird gemäß der Erfindung dadurch begegnet, dass die Beschichtung vor dem Bruchtrennen des Bauteils mechanisch umgeformt wird, um die inneren Zugspannungen in der Beschichtung zu kompensieren.

Das Umformen beinhaltet vorzugsweise ein Walzen der Beschichtung, insbesondere ein Festwalzen.

Den inneren Zugspannungen in der Beschichtung kann zusätzlich dadurch entgegengewirkt werden, dass die Beschichtung vor dem Umformen im Rahmen einer spanenden Zwischenbearbeitung auf ein definiertes Maß reduziert wird.

Bei Lagerbauteilen, die höchsten Belastungen ausgesetzt sind, kann das Umformen (Walzen) bewusst auf ein Maß erhöht werden, dass in der Beschichtung Druckeigenspannungen verbleiben. Neben dem Umformen der Beschichtung kann zusätzlich auch noch eine Gegen-Härtezone zur Erzeugung von Gegen-Druckspannungen gebildet werden, die den inneren Zugspannungen der Beschichtung entgegengesetzt sind.

Die Gegen-Härtezone wird vorzugsweise vor dem Aufbringen der Beschichtung und vorzugsweise an einer Außenkontur des Bauteils gebildet. Größe, Form und Lage der Gegen-Härtezone können experimentell bestimmt werden.

Gemäß einem zweiten Aspekt der Erfindung umfasst das erfindungsgemäße Verfahren zur Herstellung eines bruchgetrennten Bauteils, insbesondere eines Pleuels, mit einer wenigstens teilweise beschichteten Bohrung folgende Schritte:
- Bereitstellen eines Rohbauteils;
- Aufbringen einer Beschichtung aus einem Lagerwerkstoff an einer Bohrungsoberfläche vor einem Bruchtrennen des Bauteils; und.
- Bilden einer Gegen-Härtezone vor dem Aufbringen der Beschichtung zur Erzeugung von Druckspannungen, die inneren Zugspannungen der Beschichtung entgegengesetzt sind.

Bei diesem alternativen Verfahren wird den in der Beschichtung induzierten Zugspannungen, die nach dem Bruchtrennen des Bauteils zu einem "Einfallen" führen, allein durch Bilden einer Gegen-Härtezone vor dem Aufbringen der Beschichtung entgegengewirkt. Die Gegen-Härtezone erzeugt Druckspannungen im Bauteil, die den inneren Zugspannungen der Beschichtung entgegengesetzt sind.

Die Gegen-Härtezone wird vorzugsweise an einer Außenkontur des Bauteils gebildet. Größe, Form und Lage der Gegen-Härtezone können wiederum experimentell bestimmt werden.

Weitere Details der Erfindung werden nachfolgend unter Bezugnahme auf die beigefügten Zeichnungen beschrieben. In den Zeichnun gen zeigen:
- Figur 1 einen Teil eines ersten Pleuels; und
- Figur 2 einen Teil eines zweiten Pleuels.

Die Figuren zeigen jeweils das große Lagerauge eines als Pleuel 10 bzw. 20 für eine Kraftfahrzeug-Brennkraftmaschine ausgebildeten Lagerbauteils. Die Pleuel 10, 20 sind in einem Schmiede-, Sinter- oder Sinter-Schmiede-Verfahren hergestellt Das große Lagerauge ist mit einer durch Beschichtung seiner Innenfläche gebildeten Funktionsauflage 12, 22 versehen, die auf einem Zinn- (Sn-) Pulver basiert. Die Funktionsauflage 12, 22 wird thermisch mithilfe eines Lasers aufgebracht, sodass sich zwischen dem Pleuelgrundwerkstoff und dem die Funktionsauflage 12, 22 bildenden Lagerwerkstoff ein stoffschlüssiger Verbund bildet.

Die Funktionsauflage 12, 22 überdeckt je nach Anforderung insbesondere die gesamte oder nur einen Teil der inneren Bohrungsoberfläche des großen Lagerauges. Die Funktionsauflage 12, 22 kann sich, wie in den Figuren gezeigt, nur um ca. 180° des Bohrungsumfangs erstrecken. Auch die axiale Ausdehnung der radial vollständig umlaufenden oder partiellen Funktionsauflage 12 kann variieren; beispielsweise kann ein bestimmter axialer Abstand vom Bohrungsrand vorgesehen sein.

Durch die Beschichtung mit einem Sn-basierten Lagerwerkstoff werden in der Funktionsauflage 12, 22 Zugspannungen induziert. Diese inneren Spannungen rühren daher, dass das Bauteil beim Beschichten aufgrund der niedrigen Schmelztemperatur des Sn-Werkstoffes nicht nennenswert heiß werden darf (maximal 100°C). Ansonsten erstarrt der Lagerwerkstoff nicht rasch genug, und es stellt sich eine grobe Gefügestruktur mit schlechten Dauerfestigkeitseigenschaften ein.

Durch Bruchtrennen entlang der Ebene 14 bzw. 24 ist vom Pleuelfuß 16 bzw. 26 ein Pleuellagerdeckel 18 bzw. 28 trennbar. Bei den in den Figuren dargestellten Ausführungsbeispielen ist nur die Bohrungsoberfläche des Pleuellagerdeckels 18, 28 beschichtet. Beim Bruchtrennen des beschichteten Pleuels 10, 20 würden die in der Sn-basierten Funktionsauflage 12, 22 vorliegenden inneren Zugspannungen zu einem Einfallen des Pleuellagerdeckels 18, 28 gegenüber dem Pleuelfuß 16, 26 führen.

Deshalb wird gemäß einer ersten Verfahrensalternative die Funktionsauflage 12, 22 vor dem Bruchtrennen umgeformt, um die inneren Zugspannungen in der Beschichtung zu kompensieren. Das Umformen erfolgt durch Walzen (Festwalzen, kein Glattwalzen), wofür handelsübliche Werkzeuge eingesetzt werden können. Die hierfür erforderliche mechanische Vorbearbeitung stellt entweder einen eigenen Prozessschritt (Ausdrehen) dar oder wird mit einem geeigneten Kombinationswerkzeug (z. B. mit Schäl- und Walzteil) im gleichen Prozessschritt durchgeführt.

Im Falle von höchstbelasteten Lagerbauteilen wird der Lagerwerkstoff so stark gewalzt, dass die inneren Zugspannungen nicht nur kompensiert werden, sondern dass in der Beschichtung Druckeigenspannungen verbleiben. Gegebenenfalls wird diese Maßnahme kombiniert mit der Bildung einer oder mehrerer zusätzlicher Gegen-Härtezonen 19 bzw. 29 zur Erzeugung von Gegen-Druckspannungen, die den inneren Zugspannungen der Beschichtung entgegengesetzt sind. Die Gegen-Härtezonen 19, 29 werden vor dem Aufbringen der Beschichtung an einer Außenkontur des Bauteils gebildet, wobei Größe, Form und Lage der Gegen-Härtezonen 19, 29 experimentell bestimmt werden. Details zur Herstellung der Gegen-Härtezonen 19, 29 werden nachstehend im Rahmen der zweiten Verfahrensalternative erläutert.

Gemäß der zweiten Verfahrensalternative werden die unterschiedlichen Steifigkeiten des Pleuelfußes 16, 26 und des Pleuellagerdeckels 18, 28 allein dadurch angeglichen, dass anstelle des Walzens des Lagerwerkstoffs schon vor dem Aufbringen der Beschichtung wenigstens eine Gegen-Härtezone 19, 29 zur Erzeugung von Druckspannungen gebildet wird, die den inneren Zugspannungen der danach hergestellten Funktionsauflage 12, 22 entgegengesetzt sind.

Die Gegen-Härtezonen 19, 29 werden gebildet, indem vorbestimmte Bereiche der Außenkontur des Bauteils einer partiellen Wärmebehandlung unterzogen werden (Laser- oder induktive Härtung). Größe, Form und Lage der Gegen-Härtezonen 19, 29 sowie deren Einhärtetiefe können wiederum empirisch, z. B. mittels Bruchtrennen von Referenzbauteilen ohne Gegen-Härtezonen, vor dem Bruchtrennen ermittelt werden. Alternativ kann auch die zu beschichtende Bohrung des Bauteiles ganz oder partiell einer Wärmebehandlung unterzogen werden (Laser- oder induktive Härtung).

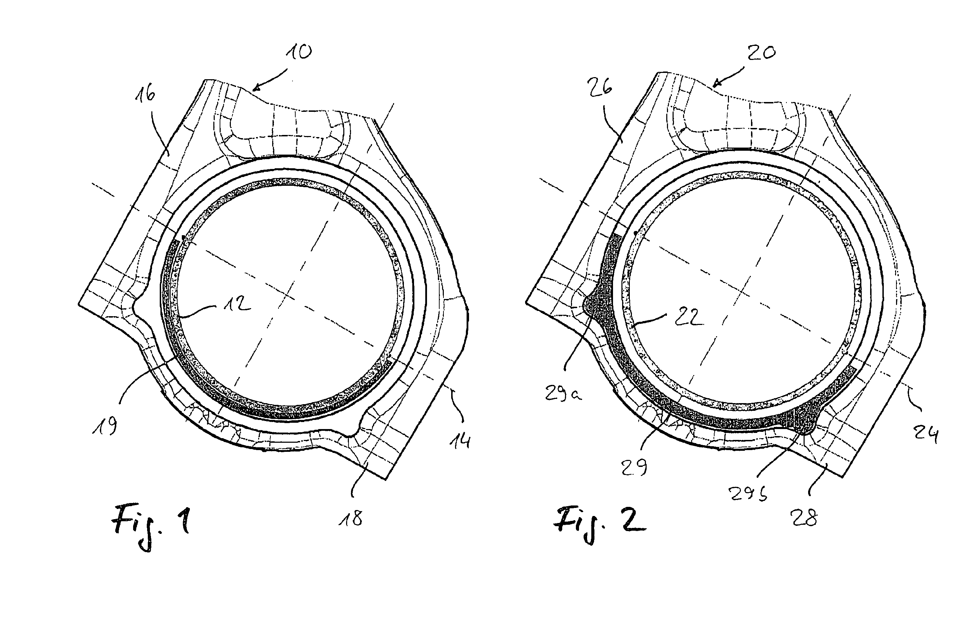

Figur 1 zeigt ein Pleuel 10 mit einer durch Beschichtung integrierten Funktionsauflage 12 und einer in unmittelbarer Nähe der Lagerbeschichtung angeordneten Gegen-Härtezone 19 am Pleuellagerdeckel 18. Bei dem in Figur 2 gezeigten Pleuel 20 hat die Gegenhärtezone 29 am Pleuellagerdeckel 28 zwei erweiterte Bereiche 29a, 29b und ist von der Funktionsauflage 22 etwas beabstandet.

Nach dem Beschichten sowie dem vorherigen Härten und/oder nachträglichen Umformen wird durch Bruchtrennen der Pleuellagerdeckel 18, 28 vom Pleuelfuß 16, 26 getrennt. Aufgrund der oben beschriebenen Maßnahmen sind die Spannungen im Pleuel 10, 20 so verteilt, dass nach dem Bruchtrennen die einzelnen Komponenten des Bauteils, hier der Pleuelfuß 16, 26 und der Pleuellagerdeckel 18, 28, ohne Richten oder Montagehilfen einwandfrei fügbar sind und ein seitlicher Stoß vermieden ist. Damit ist der Prozess reproduzierbar und die Funktionssicherheit des Bauteils gewährleistet. Nach dem Bruchtrennen des Bauteils erfolgt in der Regel noch eine Fertigbearbeitung, umfassend eine Reinigung, Planschleifen und/oder Honen.

## Patentansprüche

1. Verfahren zur Herstellung eines bruchgetrennten Bauteils, insbesondere eines Pleuels, mit einer wenigstens teilweise beschichteten Bohrung, umfassend folgende Schritte:
- Bereitstellen eines Rohbauteils;
- Aufbringen einer Beschichtung aus einem Lagerwerkstoff an einer Bohrungsoberfläche; und
- Umformen der Beschichtung zur Kompensation von inneren Zugspannungen in der Beschichtung;
**dadurch gekennzeichnet, dass** das Umformen der Beschichtung vor einem Bruchtrennen des Bauteils erfolgt.

2. Verfahren nach Anspruch 1, **dadurch gekennzeichnet, dass** das Umformen ein Walzen der Beschichtung beinhaltet.

3. Verfahren nach Anspruch 1 oder 2, **dadurch gekennzeichnet, dass** die Beschichtung vor dem Umformen auf ein definiertes Maß reduziert wird.

4. Verfahren nach einem der vorhergehenden Ansprüche, **dadurch gekennzeichnet, dass** neben dem Umformen der Beschichtung eine Gegen-Härtezone zur Erzeugung von Gegen-Druckspannungen gebildet wird, die inneren Zugspannungen der Beschichtung entgegengesetzt sind.

5. Verfahren nach Anspruch 4, **dadurch gekennzeichnet, dass** die GegenHärtezone vor dem Aufbringen der Beschichtung gebildet wird.

6. Verfahren zur Herstellung eines bruchgetrennten Bauteils, insbesondere eines Pleuels, mit einer wenigstens teilweise beschichteten Bohrung, umfassend folgende Schritte:
- Bereitstellen eines Rohbauteils;
- Aufbringen einer Beschichtung aus einem Lagerwerkstoff an einer Bohrungsoberfläche vor einem Bruchtrennen des Bauteils; und
- Bilden einer Gegen-Härtezone zur Erzeugung von Gegen-Druckspannungen, die inneren Zugspannungen der Beschichtung entgegengesetzt sind;
**dadurch gekennzeichnet, dass** das Bilden der Gegen-Härtezone vor dem Aufbringen der Beschichtung erfolgt.

7. Verfahren nach einem der Ansprüche 4 bis 6, **dadurch gekennzeichnet, dass** die Gegen-Härtezone an einer Außenkontur des Bauteils gebildet wird.

8. Verfahren nach einem der Ansprüche 4 bis 6, **dadurch gekennzeichnet, dass** die Härtezone an der zu beschichtenden Bohrung des Bauteils gebildet wird.

9. Verfahren nach einem der Ansprüche 4 bis 8, **dadurch gekennzeichnet, dass** Größe, Form, Lage und/oder Einhärtetiefe der Gegen-Härtezone experimentell bestimmt werden.

10. Verfahren nach einem der vorhergehenden Ansprüche, **dadurch gekennzeichnet, dass** die Beschichtung thermisch aufgebracht wird, vorzugsweise mithilfe eines Lasers.

11. Verfahren nach einem der vorhergehenden Ansprüche, **dadurch gekennzeichnet, dass** als Lagerwerkstoff für die Beschichtung ein niedrigschmelzender Werkstoff gewählt wird, insbesondere ein Sn-basiertes System.

## Claims

1. A method for producing a fracture-divided component, especially a connecting rod, with an at least partially coated bore, comprising the following steps:
- providing an unfinished component;
- applying a coating of a bearing material to a bore surface; and
- forming the coating to compensate inner tensile stresses in the coating;
**characterised in that** the forming of the coating takes place before a fraction division of the component.

2. A method according to claim 1, **characterised in that** the forming contains a rolling of the coating.

3. A method according to claim 1 or 2, **characterised in that** the coating is reduced to a defined extent before the forming.

4. A method according to any one of the preceding claims, **characterised in that** apart from the forming of the coating, a counter-hardness zone is formed to produce counter-compressive stresses, which oppose inner tensile stresses of the coating.

5. A method according to claim 4, **characterised in that** the counter-hardness zone is formed before the coating is applied.

6. A method for producing a fracture-divided component, especially a connecting rod, with an at least partially coated bore, comprising the following steps:
- providing an unfinished component;
- applying a coating of a bearing material to a bore surface before a fracture division of the component; and
- forming a counter-hardness zone to produce counter-compressive stresses, which oppose inner tensile stresses of the coating;
**characterised in that** the formation of the counter-hardness zone takes place before the coating is applied.

7. A method according to any one of claims 4 to 6, **characterised in that** the counter-hardness zone is formed on an outer contour of the component.

8. A method according to any one of claims 4 to 6, **characterised in that** the hardness zone is formed on the bore that is to be coated of the component.

9. A method according to any one of claims 4 to 8, **characterised in that** the size, shape, position and/or hardening depth of the counter-hardness zone are determined experimentally.

10. A method according to any one of the preceding claims, **characterised in that** the coating is applied thermally, preferably with the aid of a laser.

11. A method according to any one of the preceding claims, **characterised in that** a low-melting material is selected as the bearing material for the coating, especiatty an Sn-based system.

## Revendications

1. Procédé de fabrication d'une pièce en particulier d'une bielle fracturée comprenant un alésage au moins partiellement revêtu, comprenant les étapes suivantes :
- préparation d'une pièce brute,
- application d'un revêtement en un matériau pour palier antifriction sur une surface d'alésage, et
- mettre le revêtement en forme pour permettre de compenser les contraintes de traction interne dans ce revêtement,
**caractérisé en ce que**
la mise en forme du revêtement est effectuée avant la fracture de la pièce.

2. Procédé conforme à la revendication 1,
**caractérisé en ce que**
la mise en forme du revêtement comprend un laminage de ce revêtement.

3. Procédé conforme à la revendication 1 ou 2
**caractérisé en ce qu'**
avant la mise en forme le revêtement est réduit à une dimension définie.

4. Procédé conforme à l'une des revendications précédentes,
**caractérisé en ce qu'**
outre la mise en forme du revêtement est formée une zone de durcissement antagoniste pour obtenir des contraintes de compression antagonistes qui s'apposent aux contraintes de traction du revêtement.

5. Procédé à la revendication 4,
**caractérisé en ce que**
la zone de durcissement antagoniste est formée avant l'application du revêtement.

6. Procédé d'obtention d'une pièce en particulier d'une bielle fracturée comprenant un alésage au moins partiellement revêtu comprenant les étapes suivantes consistant à :
- préparer une pièce brute,
- appliquer un revêtement en un matériau pour palier antifriction sur une surface de l'alésage avant la fracture de la pièce, et
- former une zone de durcissement antagoniste pour obtenir des contraintes de compressions antagonistes qui s'opposent aux contraintes de traction du revêtement,
**caractérisé en ce que**
la formation de la zone de durcissement antagoniste est effectuée avant l'application du revêtement.

7. Procédé conforme à l'une des revendications 4 à 6,
**caractérisé en ce que**
la zone de durcissement antagoniste est formée au niveau d'un contour externe de la pièce.

8. Procédé conforme à l'une des revendications 4 à 6,
**caractérisé en ce que**
la zone de durcissement antagoniste est formée sur l'alésage de la pièce devant être revêtue.

9. Procédé conforme à l'une des revendications 4 à 8,
**caractérisé en ce que**
la dimension, la forme, la position et/ou la profondeur de durcissement de la zone de durcissement antagoniste sont déterminée(s) expérimentalement.

10. Procédé conforme à l'une des revendications précédentes,
**caractérisé en ce que**
le revêtement est appliqué thermiquement, de préférence à l'aide d'un laser.

11. Procédé conforme à l'une des revendications précédentes,
**caractérisé en ce qu'**
en tant que matériau pour palier antifriction pour le revêtement, on choisit un matériau ayant un point de fusion peu élevé, en particulier un système à base d'étain.
